# EUROPEAN PATENT APPLICATION

(11) **EP 4 080 598 A1**
(43) Date of publication of application: **26.10.2022**
(21) Application number: 20914835.2
(22) Date of filing: 20.01.2020

(54) **ELECTRODE ASSEMBLY AND BATTERY**

(71) Applicant: Ningde Amperex Technology Ltd., Ningde, Fujian 350900 (CN)
(72) Inventor: TIAN, Jiao, Ningde, Fujian 350900 (CN); XU, Yujiang, Ningde, Fujian 350900 (CN); ZENG, Qiao, Ningde, Fujian 350900 (CN)
(74) Representative: Klunker IP Patentanwälte PartG mbB
(86) International application number: PCT/CN2020/073334
(87) International publication number: WO 2021/146870

(57) **Abstract**

This application provides an electrode assembly, including a first electrode plate, a second electrode plate, and a separator. The separator is disposed between the first electrode plate and the second electrode plate. A plurality of the first electrode plates and a plurality of the second electrode plates are stacked. The electrode assembly further includes a first tab disposed on the first electrode plate, and a second tab and a third tab that are disposed on the second electrode plate. Projections of the first tab, the second tab, and the third tab on the first electrode plate do not overlap. The electrode assembly is provided with a multi-tab structure to achieve purposes of enhancing a current-carrying capacity of the battery and reducing a temperature rise. This application further provides a battery containing the electrode assembly.

## Description

### TECHNICAL FIELD

This application relates to the field of batteries, and in particular, to an electrode assembly and a battery that contains the electrode assembly.

### BACKGROUND

The application of 5G is accompanied with higher requirements imposed by consumers on battery performance of a portable electronic product such as a smart phone and a tablet computer. Existing batteries have the problem of a high temperature rise in both the battery and the integrated electronic product, and the performance of the battery and the electronic product may deteriorate if the temperature rise is too high. The existing battery adopts a two-tab structure, which does not improve an overall current-carrying capacity of the battery, and therefore, the temperature rise of the battery and the integrated electronic product is still relatively high.

### SUMMARY

In view of the foregoing situation, it is necessary to provide an electrode assembly capable of increasing a current-carrying capacity of a battery and reducing a temperature rise, and to provide a battery containing the electrode assembly.

An embodiment of this application provides an electrode assembly, including a first electrode plate, a second electrode plate, and a separator. A polarity of the second electrode plate is opposite to a polarity of the first electrode plate, and the separator is disposed between the first electrode plate and the second electrode plate. A plurality of the first electrode plates and a plurality of the second electrode plates are stacked to form the electrode assembly. The electrode assembly further includes a first tab, a second tab, and a third tab. The first tab is disposed on the first electrode plate, and the second tab and the third tab are disposed on the second electrode plate. In a thickness direction of the electrode assembly, projections of the first tab, the second tab, and the third tab on the first electrode plate do not overlap. The three tabs may be configured as two positive tabs and one negative tab, or two negative tabs and one positive tab. The plurality of tabs are connected in parallel to shunt a current to reduce a temperature rise of the electrode assembly.

In an optional embodiment, the plurality of second electrode plates include a first electrode plate unit and a second electrode plate unit. The second tab is disposed on the first electrode plate unit, and the third tab is disposed on the second electrode plate unit.

In an optional embodiment, the second tab and the third tab are disposed on an identical second electrode plate.

Further, in the thickness direction of the electrode assembly, a projection of the first tab on the first electrode plate is located between a projection of the second tab on the first electrode plate and a projection of the third tab on the first electrode plate.

In an optional embodiment, in a length direction of the electrode assembly, the second tab extends out of a first end of the electrode assembly, and the third tab extends out of a second end of the electrode assembly.

In an optional embodiment, the first tab includes a plurality of first tab units. The plurality of first tab units are disposed on the plurality of first electrode plates respectively. The plurality of first tab units are stacked in the thickness direction of the electrode assembly to form the first tab.

Further, a fastener is disposed between the plurality of first tab units, and the fastener is configured to connect the plurality of first tab units to form the first tab.

In an optional embodiment, each of the first tab units and each of the first electrode plates are integrally formed.

In an optional embodiment, in the thickness direction of the electrode assembly, a projection of a first tab unit disposed on an n^{th} first electrode plate and projected on the first electrode plate overlaps that of a first tab unit disposed on an (n+2)^{th} first electrode plate. This increases a spacing between adjacent first tab units and improves heat dissipation performance of the first tab.

In an optional embodiment, at least two electrical connection portions are disposed at an end of the first tab, wherein the end of the first tab extends out of the electrode assembly. The at least two electrical connection portions are interspaced and configured to connect an external circuit. In this way, the first tab is divided into two tabs of identical polarity, thereby further shunting a current and increasing a current-carrying capacity of the electrode assembly.

In an optional embodiment, the electrode assembly further includes a fourth tab. The fourth tab is disposed on the first electrode plate or the second electrode plate, and, in the thickness direction of the electrode assembly, a projection of the fourth tab on the first electrode plate does not overlap the projections of the first tab, the second tab, and the third tab on the first electrode plate.

In an optional embodiment, in a length direction of the electrode assembly, the first tab extends out of a first end of the electrode assembly, and the second tab and the third tab extend out of a second end of the electrode assembly.

In an optional embodiment, a surface of the first tab or a surface of the third tab is plated with a metal material capable of being soldered and/or brazed, so as to enhance performance of the tabs including a current-carrying capacity.

In an optional embodiment, the metal material capable of being soldered and/or brazed is nickel.

In an optional embodiment, a material of the first tab or the third tab may be selected from copper, nickel, or nickel-plated copper.

An embodiment of this application further provides a battery. The battery includes a package and any of the electrode assemblies described above. The package accommodates the electrode assembly. The first tab, the second tab, and the third tab extend out of the package.

Further, the battery includes a connecting piece. The connecting piece is disposed on an outer surface of the electrode assembly and configured to connect the package and the electrode assembly.

In the electrode assembly, the first tab, the second tab, and the third tab are disposed. Therefore, the electrode assembly exhibits a multi-tab structure, and shunts the current by using a plurality of parallel-connected tabs, thereby enhancing the current-carrying capacity of the battery and reducing the temperature rise.

### BRIEF DESCRIPTION OF DRAWINGS

FIG. 1 is a schematic diagram of an exterior structure of an electrode assembly according to a first embodiment;
FIG. 2 is a schematic structural diagram of a first electrode plate and a second tab of the electrode assembly shown in FIG. 1;
FIG. 3 is a schematic diagram of an expanded structure of the electrode assembly shown in FIG. 1;
FIG. 4 is a schematic diagram of a laminated structure of the electrode assembly shown in FIG. 1;
FIG. 5 is a schematic structural diagram of a first electrode plate and a second electrode plate according to a second embodiment;
FIG. 6 is a schematic diagram of an expanded structure of an electrode assembly according to a second embodiment;
FIG. 7 is a schematic diagram of an exterior structure of an electrode assembly according to a third embodiment;
FIG. 8 is a schematic structural diagram of a first tab and a second tab of the electrode assembly shown in FIG. 7 according to a third embodiment;
FIG. 9 is a schematic diagram of an expanded structure of the electrode assembly shown in FIG. 7 according to a third embodiment;
FIG. 10 is a schematic structural diagram of a first electrode plate and a second electrode plate according to a fourth embodiment;
FIG. 11 is a schematic diagram of an exterior structure of an electrode assembly according to a fifth embodiment;
FIG. 12 is a schematic structural diagram of a first electrode plate and a second electrode plate of the electrode assembly shown in FIG. 11 according to a fifth embodiment;
FIG. 13 is a schematic diagram of an expanded structure of the electrode assembly shown in FIG. 11 according to a fifth embodiment;
FIG. 14 is a schematic diagram of an exterior structure of an electrode assembly according to a sixth embodiment;
FIG. 15 is a schematic diagram of a laminated structure of an electrode assembly according to a seventh embodiment;
FIG. 16 is a schematic diagram of a laminated structure of an electrode assembly according to an eighth embodiment; and
FIG. 17 is a schematic structural diagram of a battery according to a ninth embodiment.

**Reference numerals:**

| | |
|---|---|
| Electrode assembly | 100 |
| First end | 101 |
| Second end | 102 |
| Seal | 103 |
| First electrode plate | 10 |
| Second electrode plate | 20 |
| First electrode plate unit | 21 |
| Second electrode plate unit | 22 |
| First side | 23 |
| Second side | 24 |
| Separator | 30 |
| First tab | 40 |
| First tab unit | 41 |
| Electrical connection portion | 42 |
| Second tab | 50 |
| Third tab | 60 |
| Fourth tab | 70 |
| Battery | 200 |
| Package | 201 |
| Connecting piece | 202 |

### DETAILED DESCRIPTION OF EMBODIMENTS

The following clearly and fully describes the technical solutions in the embodiments of this application with reference to the drawings hereof. Apparently, the described embodiments are merely a part of but not all of the embodiments of this application. All other embodiments derived by a person of ordinary skill in the art based on the embodiments of this application without making any creative efforts shall fall within the protection scope of this application.

It needs to be noted that an element referred to as being "fixed to" another element may directly exist on the other element or may be fixed to the other element through an intermediate element. An element considered to be "connected to" another element may be directly connected to the other element or may be connected to the other element through an intermediate element. An element considered to be "disposed on" another element may be directly disposed on the other element or may be disposed on the other element through an intermediate element. The terms "vertical", "horizontal", "left", "right" and similar expressions used herein are merely for ease of description.

Unless otherwise defined, all technical and scientific terms used herein have the same meanings as usually understood by a person skilled in the technical field of this application. The terms used in the specification of this application herein are merely intended for describing specific embodiments but are not intended to limit this application. The term "and/or" used herein is intended to include any and all combinations of one or more related items preceding and following the term.

An embodiment of this application provides an electrode assembly, including a first electrode plate, a second electrode plate, and a separator. A polarity of the second electrode plate is opposite to a polarity of the first electrode plate, and the separator is disposed between the first electrode plate and the second electrode plate. A plurality of the first electrode plates and a plurality of the second electrode plates are stacked to form the electrode assembly. The electrode assembly further includes a first tab, a second tab, and a third tab. The first tab is disposed on the first electrode plate, and the second tab and the third tab are disposed on the second electrode plate. In a thickness direction of the electrode assembly, projections of the first tab, the second tab, and the third tab on the first electrode plate do not overlap.

In the electrode assembly, the first tab, the second tab, and the third tab are disposed. Therefore, the electrode assembly exhibits a multi-tab structure, and shunts the current by using a plurality of parallel-connected tabs, thereby enhancing a current-carrying capacity of the battery and reducing a temperature rise.

The following describes some embodiments of this application in detail. To the extent that no conflict occurs, the following embodiments and the features in the embodiments may be combined with each other.

### First Embodiment

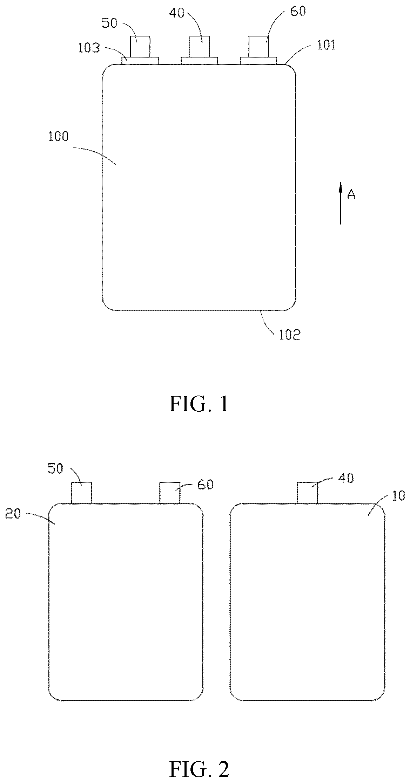

Referring to FIG. 1 and FIG. 2, an electrode assembly 100 includes a first electrode plate 10, a second electrode plate 20, and a separator 30. A polarity of the second electrode plate 20 is opposite to a polarity of the first electrode plate 10, and the separator 30 is disposed between the first electrode plate 10 and the second electrode plate 20. A plurality of the first electrode plates 10 and a plurality of the second electrode plates 20 are stacked to form the electrode assembly 100. The electrode assembly 100 further includes a first tab 40, a second tab 50, and a third tab 60. The first tab 40 is disposed on the first electrode plate 10, and the second tab 50 and the third tab 60 are disposed on the second electrode plate 20. In a thickness direction of the electrode assembly 100, projections of the first tab 40, the second tab 50, and the third tab 60 on the first electrode plate 10 do not overlap. The three tabs may be configured as two positive tabs and one negative tab, or two negative tabs and one positive tab. The plurality of tabs are connected in parallel to shunt a current to reduce a temperature rise of the electrode assembly 100. According to an embodiment of this application, a material of the negative tab may be selected from copper, nickel, or nickel-plated copper.

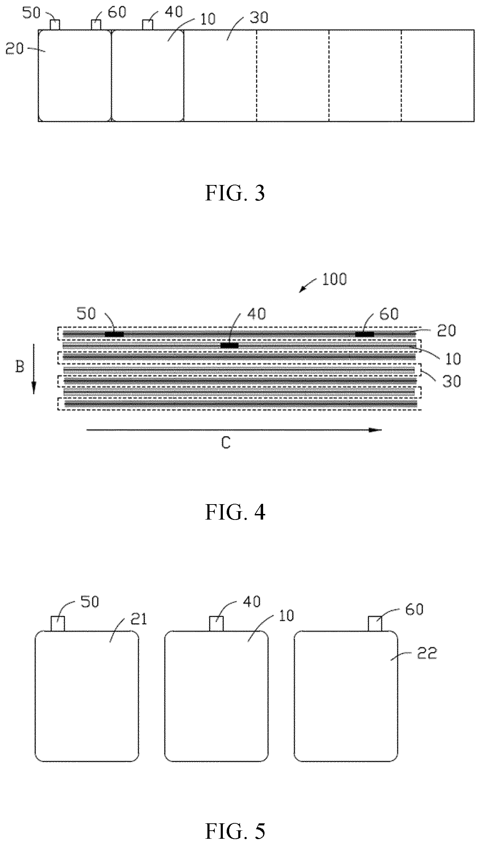

Referring to FIG. 3 and FIG. 4, when the electrode assembly 100 is expanded, a plurality of first electrode plates 10 and a plurality of second electrode plates 20 are alternately disposed on the separator 30. The first tab 40 is disposed on one of the first electrode plates 10, and the second tab 50 and the third tab 60 are disposed on an identical second electrode plate 20. The separator 30 is folded in a Z shape or stacked so that a plurality of first electrode plates 10 and a plurality of second electrode plates 20 are stacked, and so that the separator 30 is disposed between the first electrode plate 10 and the second electrode plate 20. FIG. 3 shows a first electrode plate 10 and a second electrode plate 20 as an example. Other first electrode plates 10 and second electrode plates 20 disposed on the separator 30 are omitted in FIG. 3. The plurality of first electrode plates 10 are electrically connected, and the plurality of second electrode plates 20 are also electrically connected. The first electrode plates 10 are insulated from the second electrode plates 20 by the separator 30.

A direction indicated by an arrow A in FIG. 1 is a length direction of the electrode assembly 100, and a direction indicated by an arrow B in FIG. 4 is a thickness direction of the electrode assembly 100. In the first embodiment, the first tab 40, the second tab 50, and the third tab 60 are all extend out of an identical end of the electrode assembly 100 in the length direction. In the thickness direction of the electrode assembly 100, a projection of the first tab 40 on the first electrode plate 10 is located between a projection of the second tab 50 on the first electrode plate 10 and a projection of the third tab 60 on the first electrode plate. Understandably, in other embodiments, the projection of the second tab 50 on the first electrode plate 10 may be located between the projection of the first tab 40 and the projection of the third tab 60, or the projection of the third tab 60 on the first electrode plate 10 may be located between the projection of the first tab 40 and the projection of the second tab 50. This application is not limited thereto.

Further, the electrode assembly 100 further includes a seal 103. The seal 103 is disposed at a junction between the tab and the electrode plate. This increases strength of the tab and prevents the tab from fracturing, and is also conducive to subsequent packaging of the electrode assembly 100. To avoid a short circuit, a spacing between adjacent seals 103 is at least 1 mm. The seal 103 may be selected from sealant, double-sided adhesive tape, hot-melt adhesive, and the like.

Further, a surface of the first tab 40 is plated with a metal material capable of being soldered and/or brazed, so as to enhance performance of the tab including a current-carrying capacity, and facilitate welding between the first tab 40 and an external circuit. In this embodiment of this application, the metal material capable of being soldered and/or brazed is preferably a nickel metal material, and a structure of the first tab 40 is preferably a nickel-plated copper structure.

### Second Embodiment

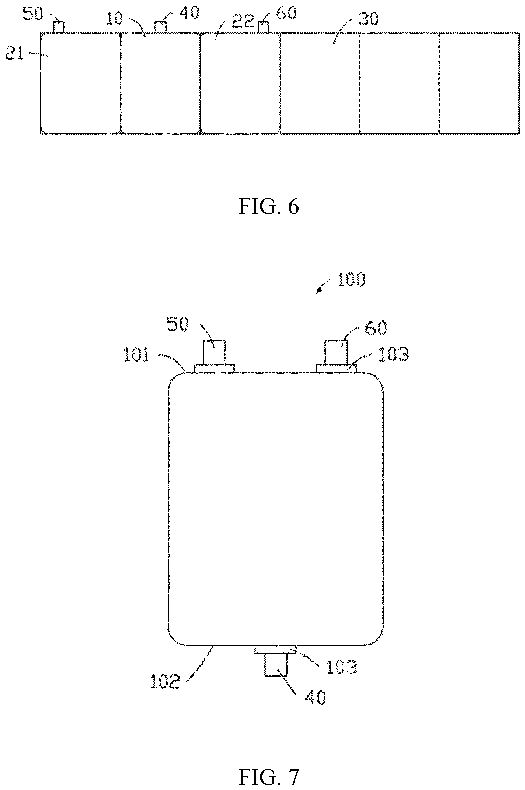

Referring to FIG. 5 and FIG. 6, an electrode assembly 100 in a second embodiment is almost identical to that in the first embodiment, but differs in: in the second embodiment, the plurality of second electrode plates 20 each include a first electrode plate unit 21 and a second electrode plate unit 22. The second tab 50 is disposed on the first electrode plate unit 21, and the third tab 60 is disposed on the second electrode plate unit 22. In other words, the second tab 50 and the third tab 60 are disposed on different second electrode plates 20 respectively, thereby helping improve manufacturability of the electrode assembly 100 and being suitable for an electrode assembly 100 whose width is relatively small. A direction indicated by an arrow C in FIG. 4 is a width direction of the electrode assembly 100.

The first electrode plate unit 21, the first electrode plate 10, and the second electrode plate unit 22 are stacked. In the thickness direction of the electrode assembly 100, the projection of the first tab 40 on the first electrode plate 10 is still located between the projection of the second tab 50 on the first electrode plate 10 and the projection of the third tab 60 on the first electrode plate. Other structures of the electrode assembly 100 in the second embodiment are almost identical to those in the first embodiment, and are omitted herein.

### Third Embodiment

Referring to FIG. 7, FIG. 8, and FIG. 9, an electrode assembly 100 in a third embodiment is almost identical to that in the first embodiment, but differs in: in the third embodiment, in a length direction of the electrode assembly 100, the first tab 40 extends out of a first end 101 of the electrode assembly 100, and the second tab 50 and the third tab 60 extend out of a second end 102 of the electrode assembly 100. The second tab 50 and the third tab 60 may be disposed on an identical second electrode plate 20 or disposed on different second electrode plates 20. This application is not limited thereto.

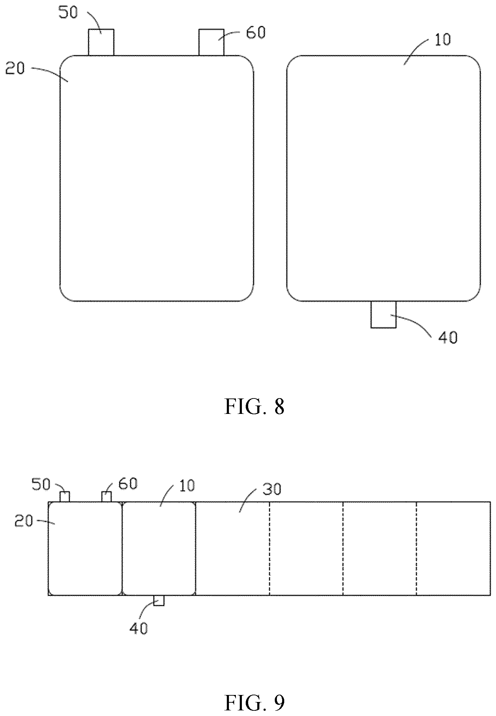

From a perspective of FIG. 3 and FIG. 9, the first electrode plate 10 in the first embodiment may be rotated horizontally by 180° to obtain a laminated structure disclosed in the third embodiment. A manner of disposing the tab in the third embodiment is suitable for an electrode assembly 100 whose width is relatively small, and avoids interference between the projections of the first tab 40, the second tab 50, and the third tab 60 on the first electrode plate 10 but is not conducive to a subsequent process of bending the tab.

### Fourth Embodiment

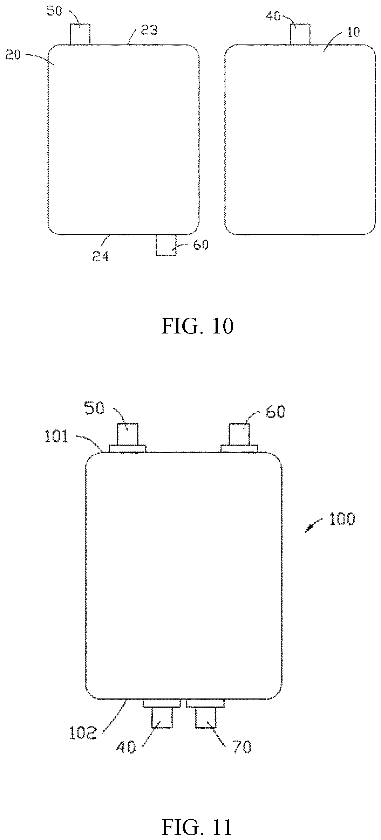

Referring to FIG. 10, an electrode assembly 100 in a fourth embodiment is almost identical to that in the first embodiment, but differs in: in the fourth embodiment, in a length direction of the electrode assembly 100, the second tab extends out of a first end 101 of the electrode assembly 100, and the third tab 60 extends out of a second end 102 of the electrode assembly 100.

In the fourth embodiment, both the second tab 50 and the third tab 60 are disposed on an identical second electrode plate 20. Along the length direction of the electrode assembly 100, the second tab is disposed on a first side 23 of the second electrode plate 20, and the third tab 60 is disposed on a second side 24 of the second electrode plate 20. In this way, after a stacking process is completed, the second tab 50 and the third tab 60 extend out of different ends of the electrode assembly 100 respectively.

Understandably, in other embodiments, the second tab 50 and the third tab 60 may also be disposed on different second electrode plates 20 to simplify manufacturing of the electrode assembly 100.

### Fifth Embodiment

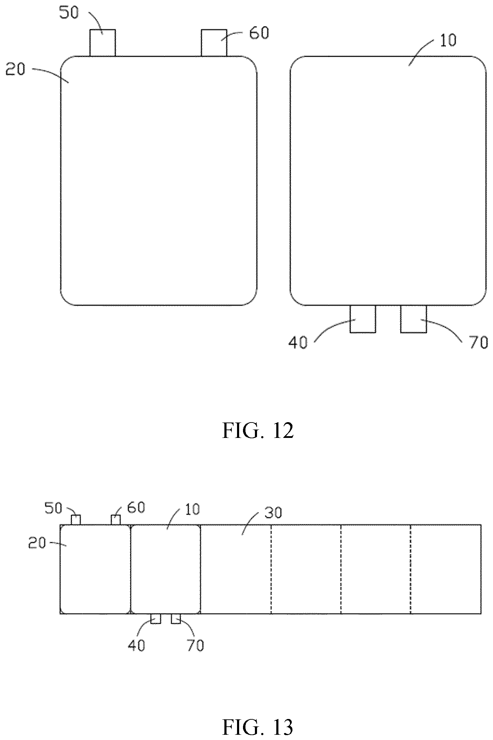

Referring to FIG. 11, FIG. 12, and FIG. 13, an electrode assembly 100 in a fifth embodiment is almost identical to that in the third embodiment, but differs in: in the fifth embodiment, the electrode assembly 100 further includes a fourth tab 70. The fourth tab 70 is disposed on the first electrode plate 10 or the second electrode plate 20. In the thickness direction of the electrode assembly 100, a projection of the fourth tab 70 on the first electrode plate 10 does overlap the projections of the first tab 40, the second tab 50, and the third tab 60 on the first electrode plate 10. FIG. 12 and FIG. 13 use an example in which the fourth tab 70 is disposed on the first electrode plate 10. In other embodiments, the fourth tab 70 and the first tab 40 may extend out of different ends of the electrode assembly 100 respectively. This application is not limited thereto.

### Sixth Embodiment

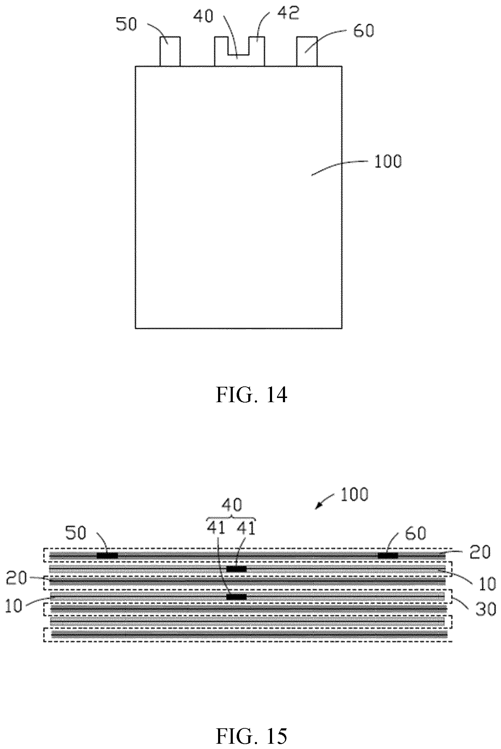

Referring to FIG. 14, an electrode assembly 100 in a sixth embodiment is almost identical to that in the first embodiment, but differs in: at least two electrical connection portions 42 are disposed at an end at which the first tab 40 extends out of the electrode assembly 100. The at least two electrical connection portions 42 are interspaced and configured to connect an external circuit. In this way, the first tab 40 is divided into two tabs of identical polarity, thereby further shunting the current and increasing the current-carrying capacity of the electrode assembly 100. The electrical connection portions 42 may be formed by welding a tab adapter onto the first tab 40, or may be formed by cutting the first tab 40. Understandably, in other embodiments, a quantity of the electrical connection portions 42 may be more than two, and this application is not limited thereto. By analogy, a plurality of electrical connection portions may also be disposed on the second tab 50 and the third tab 60.

### Seventh Embodiment

Referring to FIG. 15, an electrode assembly 100 in a seventh embodiment is almost identical to that in the first embodiment, but differs in: in the first embodiment, the first tab 40 includes a plurality of first tab units 41, and the plurality of first tab units 41 are disposed on the plurality of first electrode plates 10 respectively. In the thickness direction of the electrode assembly 100, the plurality of first tab units 41 are stacked to form the first tab 40.

Further, a fastener is disposed between the plurality of first tab units 41, and the fastener is configured to connect the plurality of first tab units 41 to form the first tab. The fastener may be made of adhesive materials such as double-sided adhesive tape and hot-melt adhesive.

Each of the first tab units 41 and each of the first electrode plates 10 are integrally formed. Specifically, each first electrode plate 10 containing the first tab units 41 may be formed by cutting a raw material of the first electrode plate 10. In other embodiments, the first tab units 41 may be disposed on the first electrode plate 10 by welding. This application is not limited thereto.

Understandably, the second tab 50 and the third tab 60 may also be disposed in a multi-layer stacked structure, and the disposition manner is similar to that of the first tab 40 and is omitted herein.

### Eighth Embodiment

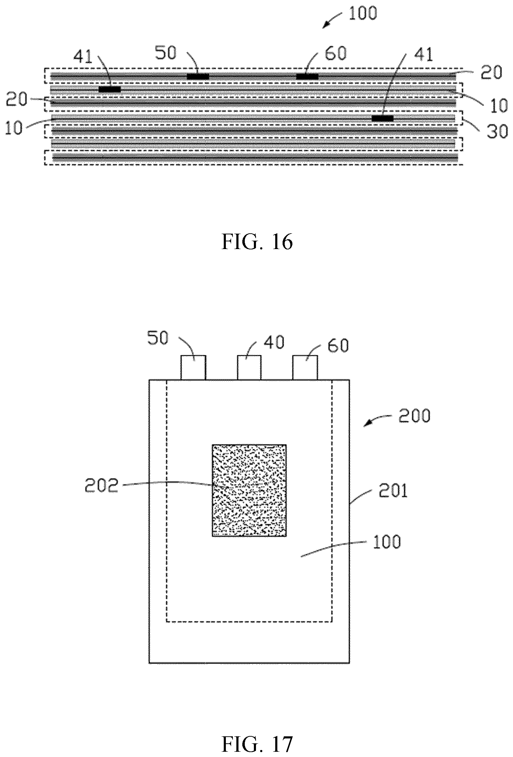

Referring to FIG. 16, an electrode assembly 100 in an eighth embodiment is almost identical to that in the seventh embodiment, but differs in: in the eighth embodiment, along the thickness direction of the electrode assembly 100, projections of the first tab units 41 on two adjacent first electrode plates 10 do not overlap. In other words, in the thickness direction of the electrode assembly 100, a projection of a first tab unit 41 disposed on an n^{th} first electrode plate 10 and projected on the first electrode plate 10 overlaps a projection of a first tab unit 41 disposed on an (n+2)^{th} first electrode plate 10.

For example, from a perspective shown in FIG. 16, the first tab unit 41 on a first-layer first electrode plate 10 is disposed to the left, the first tab unit 41 on a second-layer first electrode plate 10 is disposed to the right, the first tab unit 41 on a third-layer first electrode plate 10 is disposed farther to the left and aligned with the first tab unit 41 on the first-layer first electrode plate 10, the first tab unit 41 on a fourth-layer first electrode plate 10 is disposed farther to the right and aligned with the first tab unit 41 on the second-layer first electrode plate 10, and so on. This disposition manner can increase a spacing between adjacent first tab units 41, and help improve heat dissipation performance of the first tab 40.

### Ninth Embodiment

Referring to FIG. 17, a ninth embodiment provides a battery 200, including a package 201 and an electrode assembly 100 disclosed in any of the foregoing embodiments. The package 201 accommodates the electrode assembly 100. The first tab 40, the second tab 50, and the third tab 60 extend out of the package 201. The seal 103 is located at a junction between the package 201 and each of the first tab 40, the second tab 50, and the third tab 60 to fill a gap between the package 201 and each of the first tab 40, the second tab 50, and the third tab 60, and to prevent an electrolytic solution, chemical slurry, and the like from flowing out of the package 201.

Further, the battery 200 includes a connecting piece 202. The connecting piece 202 is disposed on an outer surface of the electrode assembly 100 and configured to connect the package 201 and the electrode assembly 100. The connecting piece 202 may be double-sided adhesive tape or hot-melt adhesive affixed to the outer surface of the electrode assembly 100.

The foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the spirit and scope of the technical solutions of this application.

## Claims

1. An electrode assembly, comprising:
a first electrode plate;
a second electrode plate, wherein a polarity of the second electrode plate is opposite to a polarity of the first electrode plate; and
a separator, disposed between the first electrode plate and the second electrode plate, wherein
a plurality of the first electrode plates and a plurality of the second electrode plates are stacked to form the electrode assembly;
the electrode assembly further comprises a first tab, a second tab, and a third tab, the first tab is disposed on the first electrode plate, and the second tab and the third tab are disposed on the second electrode plate; and
in a thickness direction of the electrode assembly, projections of the first tab, the second tab, and the third tab on the first electrode plate do not overlap.

2. The electrode assembly according to claim 1, wherein the plurality of second electrode plates comprise a first electrode plate unit and a second electrode plate unit, the second tab is disposed on the first electrode plate unit, and the third tab is disposed on the second electrode plate unit.

3. The electrode assembly according to claim 1, wherein the second tab and the third tab are disposed on an identical second electrode plate.

4. The electrode assembly according to claim 3, wherein, in the thickness direction of the electrode assembly, a projection of the first tab on the first electrode plate is located between a projection of the second tab on the first electrode plate and a projection of the third tab on the first electrode plate.

5. The electrode assembly according to claim 1, wherein, in a length direction of the electrode assembly, the second tab extends out of a first end of the electrode assembly, and the third tab extends out of a second end of the electrode assembly.

6. The electrode assembly according to claim 1, wherein the first tab comprises a plurality of first tab units, and the plurality of first tab units are disposed on the plurality of first electrode plates respectively; and the plurality of first tab units are stacked in the thickness direction of the electrode assembly to form the first tab.

7. The electrode assembly according to claim 6, wherein a fastener is disposed between the plurality of first tab units, and the fastener is configured to connect the plurality of first tab units to form the first tab.

8. The electrode assembly according to claim 6, wherein each of the first tab units and each of the first electrode plates are integrally formed.

9. The electrode assembly according to claim 6, wherein, in the thickness direction of the electrode assembly, a projection of a first tab unit disposed on an n^{th} first electrode plate on the first electrode plate overlaps that of a first tab unit disposed on an (n+2)^{th} first electrode plate.

10. The electrode assembly according to claim 1, wherein at least two electrical connection portions are disposed at an end of the first tab extending out of the electrode assembly, and the at least two electrical connection portions are interspaced and configured to connect an external circuit.

11. The electrode assembly according to claim 1, wherein the electrode assembly further comprises a fourth tab, the fourth tab is disposed on the first electrode plate or the second electrode plate, and, in the thickness direction of the electrode assembly, a projection of the fourth tab on the first electrode plate does not overlap the projections of the first tab, the second tab, and the third tab on the first electrode plate.

12. The electrode assembly according to claim 1, wherein, in a length direction of the electrode assembly, the first tab extends out of a first end of the electrode assembly, and the second tab and the third tab extend out of a second end of the electrode assembly.

13. The electrode assembly according to claim 1, wherein a surface of the first tab or a surface of the third tab is plated with a metal material capable of being soldered and/or brazed.

14. The electrode assembly according to claim 13, wherein the metal material capable of being soldered and/or brazed is nickel.

15. A battery, comprising an electrode assembly and a package, wherein the electrode assembly is the electrode assembly according to any one of claims 1 to 14, the package accommodates the electrode assembly, and the first tab, the second tab, and the third tab extend out of the package.

16. The battery according to claim 15, wherein the battery comprises a connecting piece, and the connecting piece is disposed on an outer surface of the electrode assembly and configured to connect the package and the electrode assembly.
